Europäisches Patentamt

European Patent Office

Office européen des brevets

(19)

(11)   EP 0 569 078 B1

(12)   **FASCICULE DE BREVET EUROPEEN**

(45) Date de publication et mention
de la délivrance du brevet:
**04.09.2002   Bulletin 2002/36**

(51) Int Cl.⁷: **C08F 4/642**, C08F 10/00

(21) Numéro de dépôt: **93201205.7**

(22) Date de dépôt: **27.04.1993**

(54) **Système catalytique utilisable pour la polymérisation stéréospécifique des alpha-oléfines, procédé pour cette polymérisation et polymères obtenus**

Katalysatorsystem und Verfahren zur stereospecifischen Polymerisation von Alpha-Olefinen und so erhaltene Polymere

Catalytic system and process for the stereospecific polymerisation of alpha-olefins and polymers so obtained

(84) Etats contractants désignés:
**AT BE CH DE DK ES FR GB GR IE IT LI LU NL PT SE**

(30) Priorité:  **04.05.1992  BE 9200413**

(43) Date de publication de la demande:
**10.11.1993   Bulletin 1993/45**

(73) Titulaire: **POLYPROPYLENE BELGIUM (Naamloze Vennootschap)**
**2040 Antwerpen (BE)**

(72) Inventeurs:
• **Costa, Jean-Louis**
**B-1850 Grimbergen (BE)**
• **Pamart, Sabine**
**B-7000 Mons (BE)**
• **Collette, Hervé**
**B-5810 Namur (BE)**
• **Bettonville, Serge**
**B-4102 Ougree (Seraing) (BE)**

(74) Mandataire: **Smith, Julian Philip Howard et al**
**BP International Limited,**
**Group Patents & Agreements,**
**Chertsey Road**
**Sunbury-on-Thames, Middlesex TW16 7LN (GB)**

(56) Documents cités:
**EP-A- 0 250 229          EP-A- 0 284 287**
**EP-A- 0 387 690**

• **K.Y. Choi et W.H. Ray, Rev. Macromol. Chem. Phys., C 25 (1), pg. 69-71 (1985)**
• **P.C. Barbé, G. Cecchin, L. Noristi, Advances Polym. Sc., 81, pg. 19 (1987)**
• **S. Füzesséry, Techniques de l'Ingénieur, Polypropylènes, A 3 320-1 à A 3 320-3, (1991)**

**Description**

La présente invention concerne un système catalytique utilisable pour la polymérisation stéréospécifique des alpha-oléfines et un procédé pour cette polymérisation.

Il est connu de polymériser les alpha-oléfines au moyen d'un système catalytique comprenant un constituant solide à base de trichlorure de titane et un cocatalyseur choisi parmi les composés organiques des métaux des groupes Ia, IIa et IIIa du tableau périodique (version publiée dans Handbook of Chemistry and Physics, 50e édition).

Parmi les systèmes catalytiques sus-mentionnés, ceux qui contiennent un solide catalytique à base de trichlorure de titane complexé, de forme cristalline δ et un halogénure de dialkylaluminium, tout particulièrement le chlorure de diéthylaluminium, présentent une activité et une stéréospécificité maximales [K.Y. Choi et W.H. Ray, Rev. Macromol. Chem. Phys., C 25 (1), pg. 69-71 (1985) et P.C. Barbé, G. Cecchin, L. Noristi, Advances Polym. Sc., 81, pg. 19 (1987)]. Dans la pratique, ces systèmes contiennent un large excès d'halogénure de dialkylaluminium par rapport au composé du titane [voir par exemples le brevet BE-A-780758 et la demande de brevet EP-A-261727 (SOLVAY)].

A titre d'exemple complémentaire de ces systèmes catalytiques, citons la demande de brevet EP-A-284287 qui décrit la polymérisation des alpha-oléfines en présence d'une composition à base de trichlorure de titane, d'un composé organoaluminique et d'un organosilane choisi parmi les alkoxy- ou phénoxy-silanes substitués par des radicaux phényles ou alkyles linéaires ou par des atomes de chlore.

Ici encore l'obtention de polypropylènes stéréospécifiques est réalisée en présence de composés organoaluminiques chlorés.

L'utilisation de tels systèmes catalytiques présente cependant des inconvénients. En effet, les polymères qui en sont issus contiennent une relativement grande quantité de résidus chlorés provenant essentiellement du cocatalyseur qui, s'ils ne sont pas éliminés, confèrent à ces polymères un caractère corrosif et en altèrent la stabilité.

L'utilisation de cocatalyseurs non halogénés permettrait de résoudre ce problème mais conduit à l'obtention de résines contenant une grande proportion de polymère amorphe.

On a tenté de remédier à cet inconvénient en ajoutant à ce système catalytique un terconstituant qui est généralement un composé électrodonneur et de préférence un composé aminé ou organophosphoré [Brevet GB-A-1486194 (Imperial Chemical Industries)]. L'amélioration de stéréospécificité qui en résulte est insuffisante et se fait au détriment de la productivité catalytique.

Il est également connu de polymériser les alpha-oléfines au moyen de systèmes catalytiques comprenant un solide à base de magnésium et de titane, un trialkylaluminium et un composé organique du silicium (EP-A-250229). Toutefois ces systèmes dont les solides catalytiques contiennent du magnésium sont connus pour être différents de ceux contenant un solide catalytique à base de trichlorure de titane.

On a maintenant trouvé que la combinaison de certains solides catalytiques à base de trichlorure de titane complexé, de forme cristalline δ, avec un cocatalyseur organoaluminique non halogéné et un terconstituant particulier conduit à des systèmes catalytiques pauvres en halogène ne présentant pas les inconvénients des systèmes décrits antérieurement.

La présente invention concerne dès lors un système catalytique utilisable pour la polymérisation des alpha-oléfines comprenant au moins :

(a) un solide à base de trichlorure de titane complexé de forme cristalline δ substantiellement exempt de magnésium obtenu par un procédé impliquant une réduction d'un composé de titane par un réducteur organoaluminique,
(b) un composé organoaluminique non halogéné répondant à la formule :

$$Al\, R_m\, Y_{3-m} \tag{II}$$

où :

R représente un radical hydrocarboné contenant de 1 à 18 atomes de carbone,
Y représente un groupement choisi parmi -$OR^1$, -$SR^1$ et -$NR^1R^2$ dans lequel $R^1$ et $R^2$ représentent chacun un radical hydrocarboné identique ou différent choisi parmi les radicaux alkyle, aryle, arylalkyle, alkylaryle et cycloalkyle,
m est un nombre tel que $0 < m \leq 3$,

(c) un composé oxygéné organique du silicium choisi parmi les composés représentés par la formule générale :

$$R'_n \, Si \, (OR'')_{4-n} \tag{I}$$

dans laquelle

- R' représente un atome d'hydrogène ou un radical hydrocarboné contenant de 1 à 20 atomes de carbone, au moins un de ces substituants R' étant choisi parmi les radicaux alkyle et cycloalkyle contenant au moins un atome de carbone secondaire ou tertiaire,
- R'' représente un radical hydrocarboné contenant de 1 à 3 atomes de carbone, identique ou différent de R',
- n est un nombre entier égal à 2 ou 3, les n radicaux R' et (4-n) radicaux R'' pouvant chacun indépendamment les uns des autres représenter des radicaux organiques identiques ou différents,

tel que le rapport molaire entre l'aluminium du composé organoaluminique non halogéné et le titane du solide à base de trichlorure de titane complexé de forme cristalline δ varie de 1 à 50 et le rapport molaire entre l'aluminium du composé organoaluminique et le silicium du composé oxygéné organique du silicium varie de 0,1 à 50.

Les composés (c) sont le plus souvent tels que R' représente un atome d'hydrogène ou un radical hydrocarboné contenant de 1 à 20 atomes de carbone choisi parmi les radicaux alkyle, cycloalkyle, alkényle, aryle, alkylaryle et arylalkyle, pouvant eux-mêmes porter des substituants tels que des groupements amino. De préférence R' est choisi parmi les radicaux alkyle, aryle et cycloalkyle contenant de préférence de 1 à 18 atomes de carbone.

Par ailleurs, les systèmes catalytiques selon l'invention peuvent contenir un ou plusieurs composés (c).

Les composés (c) ayant donné les meilleurs résultats sont les diméthoxy- et diéthoxysilanes substitués par au moins un radical alkyle ou cycloalkyle contenant, en position α, β ou γ, un atome de carbone secondaire ou tertiaire.

A titre d'exemples de tels composés (c), on peut citer le diisobutyldiméthoxysilane, le ditertiobutyldiméthoxysilane, le diisopropyldiméthoxysilane, le dicyclohexyldiméthoxysilane, le cyclohexylméthyldiméthoxysilane, l'isobutylméthyldiméthoxysilane.

Le composé organoaluminique non halogéné [composé (b)] est de préférence tel que

- R représente un radical hydrocarboné, contenant de 1 à 12 atomes de carbone choisi parmi les radicaux alkyle, aryle, arylalkyle, alkylaryle et cycloalkyle;
- Y représente un groupement choisi parmi -OR$^1$, -SR$^1$ et -NR$^1$R$^2$ dans lequel R$^1$ et R$^2$ représentent chacun un radical hydrocarboné identique ou différent choisi parmi les radicaux alkyle, aryle, arylalkyle, alkylaryle et cycloalkyle contenant de 1 à 20 atomes de carbone.

A titre d'exemples de composé (b) utilisable dans les systèmes catalytiques selon l'invention, on peut citer les trialkylaluminiums tels que par exemple le triméthylaluminium, le triéthylaluminium, le tripropylaluminium, le triisopropylaluminium, le tributylaluminium, le triisobutylaluminium, le trihexylaluminium, le trioctylaluminium, le tridodécylaluminium et les alkoxyalkylaluminiums tels que par exemple le diéthyléthoxyaluminium.

Il va de soi que les systèmes catalytiques selon l'invention peuvent contenir un ou plusieurs composés (b).

De préférence les composés (b) sont choisis parmi les trialkylaluminiums et les alkylalkoxyaluminiums et leurs mélanges.

Les systèmes catalytiques les plus performants contiennent, à titre de composés (b), un trialkylaluminium ou un mélange de trialkylaluminiums. Enfin, les trialkylaluminiums dont les radicaux alkyles contiennent plus de 2 atomes de carbone présentent l'avantage de pouvoir être mis en oeuvre dans une large gamme de rapports aluminium du composé (b) / titane du composé (a) sans que l'on observe de variations des propriétés des polymères qui en sont issus.

Outre le composé organoaluminique (b) et le composé oxygéné organique du silicium (c), les systèmes catalytiques selon l'invention comprennent un solide catalytique à base de trichlorure de titane complexé, de forme cristalline δ [composé (a)]. Dans le cadre de la présente invention, on entend désigner par composé (a) les solides catalytiques à base de trichlorure de titane complexé, de forme cristalline δ substantiellement exempts de magnésium obtenus par des procédés impliquant une réduction d'un composé de titane par un réducteur organoaluminique. Ces solides catalytiques à base de trichlorure de titane appartiennent à la forme cristalline δ telle que définie par exemple dans Journal of Polymer Science 51, pages 399-410 (1961). De tels solides sont généralement de couleur violette.

Selon la présente invention, on utilise préférentiellement deux types de composé (a) qui peuvent être caractérisés par leur mode d'obtention [composés (a1) et (a2)].

Le composé (a1) utilisable dans les systèmes catalytiques selon l'invention est obtenu par traitements, successifs ou combinés, du solide issu de la réduction de tétrachlorure ou de tétraalkoxyde de titane par un réducteur organoaluminique (1) par un composé électrodonneur (2) et par un composé halogéné (3).

Des réducteurs organoaluminiques (1) utilisables de préférence pour l'obtention du constituant (a1) sont les composés qui contiennent au moins un radical hydrocarboné fixé directement sur l'atome d'aluminium. Des exemples de composés de ce type sont les mono-, di- et trialkylaluminiums dont les radicaux alkyles contiennent de 1 à 12, de préférence de 1 à 6 atomes de carbone, tels que les chlorures d'alkylaluminium, les trialkylaluminiums et les alkylalkoxyaluminiums. A titre d'exemples de ces composés, on peut citer le chlorure de diéthylaluminium, le triéthylaluminium, les isoprénylaluminiums, l'hydrure de diisobutylaluminium, le diéthyléthoxyaluminium et le sesquichlorure d'éthylaluminium. Les meilleurs résultats sont obtenus avec les chlorures de dialkylaluminium et, en particulier, avec le chlorure de diéthylaluminium.

Le composé électrodonneur (2) est choisi de préférence dans la famille des éthers aliphatiques, et plus particulièrement parmi ceux dont les radicaux aliphatiques comprennent chacun de 2 à 8 atomes de carbone, de préférence de 4 à 6 atomes de carbone. Un exemple typique d'éther aliphatique donnant de très bons résultats est l'éther diisoamylique. L'éther di-n-butylique convient également bien.

Le composé halogéné (3) est choisi parmi les composés halogénés inorganiques, les composés halogénés organiques, les composés interhalogénés et les halogènes. Parmi ces composés (3), on peut citer :

- à titre de composés halogénés inorganiques, les halogénures de métaux et de non métaux, tels que les halogénures de titane ou de silicium par exemple et plus particulièrement le tétrachlorure de titane;
- à titre de composés halogénés organiques, les hydrocarbures halogénés tels que les alcanes halogénés et les tétrahalogénures de carbone par exemple et plus particulièrement l'hexachloréthane;
- à titre de composés interhalogénés, les chlorures et bromures d'iode par exemple;
- à titre d'halogène, le chlore, le brome ou l'iode.

Les composés halogénés organiques et inorganiques conviennent bien.

Les meilleurs résultats ont été obtenus avec les composés halogénés inorganiques et en particulier avec le tétrachlorure de titane.

De préférence, le traitement au moyen du composé halogéné (3) est effectué consécutivement au traitement au moyen du composé électrodonneur et se fait le plus souvent en présence d'une quantité résiduelle de ce dernier. Cette quantité résiduelle peut résulter d'une élimination partielle de la solution utilisée lors du traitement avec le composé électrodonneur ou d'une addition supplémentaire de composé électrodonneur lors du traitement au moyen du composé halogéné.

Les étapes et traitements de préparation du composé (a1) décrits ci-dessus peuvent être effectués dans un diluant hydrocarboné inerte, généralement choisi parmi les hydrocarbures aliphatiques, cycloaliphatiques et aromatiques liquides, tels que les alcanes, cycloalcanes ou isoalcanes liquides ou le benzène. Les mélanges de ces diluants conviennent également bien.

Des composés (a1) de ce type convenant particulièrement bien pour la formation des systèmes catalytiques selon l'invention sont décrits dans le brevet BE-A-780758.

A un moment quelconque de sa préparation, après l'étape de réduction ou après le traitement par le composé électrodonneur (2) ou encore après celui par le composé halogéné (3), mais de préférence après l'étape de réduction, le solide à base de $TiCl_3$ peut être soumis à un traitement visant à diminuer la friabilité de ses particules constitutives. Ce traitement, appelé "prépolymérisation", consiste à mettre le solide en contact avec une alpha-oléfine, telle que par exemple le propylène ou l'éthylène, dans des conditions polymérisantes de manière à obtenir un solide contenant en général de 5 à 500 % en poids d'alpha-oléfine "prépolymérisée" par rapport au poids de trichlorure de titane.

Le solide catalytique à base de trichlorure de titane complexé de forme cristalline δ de type (a1) peut également être activé par mise en contact avec un agent d'activation de manière à en maintenir la stabilité et/ou à en augmenter la stéréospécificité. Ce traitement d'activation consiste à mettre le solide à base de trichlorure de titane complexé de forme cristalline δ, de préférence séparé du milieu dans lequel il a été préparé et lavé par un diluant hydrocarboné inerte tel que défini plus haut, en contact avec un agent d'activation choisi parmi les composés organoaluminiques et les produits de la réaction d'un composé organoaluminique avec un composé choisi parmi les composés hydroxyaromatiques dont le groupe hydroxyle est stériquement bloqué. Le composé organoaluminique est choisi de préférence parmi les trialkylaluminiums et les chlorures d'alkylaluminiums. Parmi ces composés, les meilleurs résultats ont été obtenus avec le triéthylaluminium et le chlorure de diéthylaluminium. Le composé hydroxyaromatique dont le groupe hydroxyle est stériquement bloqué est choisi de préférence parmi les phénols di-tert-alkylés dans les positions ortho par rapport au groupe hydroxyle et les esters de l'acide 3-(3',5'-di-tert-butyl-4'-hydroxyphényl)propionique. Parmi ces composés, les meilleurs résultats ont été obtenus avec le 2,6-di-tert-butyl-4-méthylphénol et le 3-(3',5'-di-tert-butyl-4'-hydroxyphényl)propionate de n-octadécyle.

D'autres détails en rapport avec les traitements d'activation supplémentaires définis ci-dessus, notamment avec la nature des composés organoaluminiques et hydroxyaromatiques et avec les conditions opératoires dans lesquelles on les effectue sont décrits dans la demande de brevet EP-A-261727 (SOLVAY) et dans le brevet BE-A-803875 (SOLVAY).

Les composés (a1) activés conduisant aux meilleurs résultats sont ceux résultant de la méthode de préparation décrite dans la demande de brevet EP-A-261727. Ces constituants résultent du traitement d'activation des solides catalytiques à base de trichlorure de titane complexé de forme cristalline δ de type (a1) obtenus selon le brevet BE-A-780758 ci-avant et qui ont de préférence subi le traitement de prépolymérisation.

Lorsque les systèmes catalytiques selon la présente invention contiennent un solide catalytique à base de trichlorure de titane de forme cristalline δ de type (a1), ayant ou non subi le traitement d'activation et/ou de prépolymérisation, les quantités des composés (a1), (b) et (c) mises en oeuvre sont telles que le rapport molaire entre l'aluminium du composé (b) et le titane du composé (a1) varie de 1 à 50. Ces quantités sont en outre telles que le rapport molaire entre cet aluminium et le silicium du composé (c) varie de 0,1 à 50. En particulier, on obtient de bons résultats lorsque le rapport molaire entre l'aluminium de (b) et le titane de (a1) est supérieur ou égal à environ 1,5 et plus particulièrement supérieur ou égal à environ 2. Ce rapport molaire est en outre le plus souvent inférieur ou égal à environ 25 et de préférence inférieur ou égal à environ 20. Les systèmes catalytiques de ce type présentant de bonnes performances ont en général un rapport molaire entre l'aluminium du composé (b) et le silicium du composé (c) supérieur ou égal à environ 1, de préférence supérieur ou égal à environ 1,5. Ce rapport est le plus souvent inférieur ou égal à environ 10 et de préférence inférieur ou égal à environ 5.

Les systèmes catalytiques selon l'invention peuvent également contenir, à titre de solide catalytique à base de trichlorure de titane complexé, de forme cristalline δ, un composé (a2) obtenu par traitement thermique, en présence d'un agent halogéné (3) tel que défini ci-dessus, du matériau liquide résultant de la mise en contact de $TiCl_4$, prétraité par un composé électrodonneur (2) tel qu'également défini ci-dessus, avec une composition (0) correspondant à la formule générale :

$$Al\ R_p\ Z_q\ X_{3-(p+q)} \qquad (V)$$

dans laquelle

- R représente un radical hydrocarboné tel que défini ci-dessus en rapport avec la formule (II);
- Z représente un groupement choisi parmi -$OR^4$, -$SR^4$ et -$NR^4R^5$ dans lesquels $R^4$ et $R^5$ représentent chacun un radical hydrocarboné ou un atome d'hydrogène;
- X représente un atome d'halogène;
- p est un nombre quelconque tel que $0 < p < 3$;
- q est un nombre quelconque tel que $0 < q < 3$;

la somme (p + q) étant telle que $0 < (p + q) \leq 3$.

Dans la formule (V), X est de préférence le chlore; R est choisi de préférence parmi les radicaux alkyles, linéaires ou branchés contenant de 2 à 8 atomes de carbone; Z est choisi de préférence parmi les groupements -$OR^4$ dans lesquels $R^4$ est un radical alkyle linéaire ou branché, contenant de 1 à 12 atomes de carbone ou aryle éventuellement substitué, contenant de 6 à 35 atomes de carbone. Un radical R tout particulièrement préféré est le radical éthyle. Des radicaux $R^4$ tout particulièrement préférés sont les radicaux éthyle et amyle tels que les radicaux iso- et n-amyles.

Dans la formule (V), p est de préférence un nombre tel que $1 \leq p \leq 2$ et q de préférence un nombre tel que $0,1 \leq q \leq 2$.

Les compositions (O) peuvent être des composés chimiques définis ou des mélanges de composés. La formule (V) doit donc être considérée comme une formule de structure brute représentant lesdits composés, ou dans le cas de mélanges, représentant la composition moyenne de ces derniers.

Les compositions (O) peuvent être préparées par mise en contact de :

- un composé organoaluminique (A) de formule générale :

$$Al\ R_r\ X_{3-r} \qquad (VI)$$

avec
- un composé (B) choisi parmi les composés de formule générale :

- 
$$Al\ R_t\ Z_t'\ X_{3-(t + t')} \qquad\qquad (VII);$$

- 
$$Z\ H \qquad\qquad (VIII);$$

et

- les oligomères de type aluminoxane de formules :

$$\overline{-Al(R)-O}_{\overline{n}'+2} \qquad\qquad (III)$$

et,

$$(R)_2\ Al\text{-}O\text{-}[Al(R)\text{-}O]_{n'}\text{-}Al(R_2) \qquad\qquad (IV)$$

dans lesquelles R a la signification donnée ci-avant pour la formule (II) et n' est un nombre entier généralement compris entre 2 et 50
dans des proportions propres à l'obtention d'une composition (O) correspondant à la formule (V) ci-avant.

Dans les formules (VI), (VII) et (VIII) ci-dessus, R, Z et X ont respectivement les significations données ci-avant en rapport avec la formule (V). Dans la formule (VI), r est un nombre quelconque tel que $0 < r \leq 3$, et dans la formule (VII), t est un nombre quelconque tel que $0 \leq t < 3$, et t' est un nombre quelconque tel que $0 < t' \leq 3$, la somme $(t + t')$ étant telle que $0 < (t + t') \leq 3$.

Des composés (A) préférés sont les chlorures de dialkylaluminium, tout particulièrement le chlorure de diéthylaluminium. Les composés (B) de formule (VII) préférés sont les alkylalkoxyaluminiums et leurs chlorures, tout particulièrement le diéthyléthoxyaluminium et les monochlorures d'éthyléthoxy- et d'éthylisopentoxy-aluminium. A titre d'exemples de composés (B) de formule (VIII), on peut citer les alcools, les thioalcools, les phénols, les thiophénols et les amines secondaires. Des composés (B) de formule (VIII) tout particulièrement préférés sont les alcools aliphatiques et en particulier l'éthanol et les alcools iso- et n-amyliques.

Un mode opératoire particulièrement préféré et simple de préparation de la composition (0) comprend la mise en contact d'un composé (A) tel qu'un composé alkylé de l'aluminium avec un composé (B) tel qu'un alcool aliphatique dans un rapport entre l'aluminium contenu dans le composé (A) et le radical hydrocarboné contenu dans le composé (B) compris entre 1/0,1 et 1/3.

Un autre mode de préparation donnant de bons résultats comprend la mise en contact d'un composé (A) tel qu'un composé alkylé de l'aluminium avec un composé (B) tel qu'un alkylalkoxyaluminium dans un rapport entre l'aluminium contenu dans le composé (A) et le radical alkoxy contenu dans le composé (B) compris entre 1/0,1 et 1/10.

Pour la préparation des composés (a2) utilisables dans les systèmes catalytiques selon la présente invention, la composition (0) est mise en contact avec $TiCl_4$, lui-même prétraité par un composé électrodonneur (2) tel que défini ci-avant. Un exemple typique de composé électrodonneur (2) donnant de très bons résultats est ici encore l'éther diisoamylique. L'éther di-n-butylique convient également.

Le rapport molaire entre le $TiCl_4$ et l'agent électrodonneur (2) peut varier dans de larges mesures. Il varie généralement de 0,01 mole à 20 moles de $TiCl_4$ par mole de composé électrodonneur.

Les conditions générales de mise en contact du $TiCl_4$, prétraité par le composé électrodonneur comme décrit ci-avant (appelé ci-après plus brièvement "$TiCl_4$ prétraité") avec la composition (0) ne sont pas critiques pour autant qu'elles conduisent à la formation d'un matériau liquide substantiellement homogène et exempt de solide. La composition (0) et le $TiCl_4$ prétraité sont mis en contact dans des quantités respectives telles qu'il se produise une réduction au moins partielle du $TiCl_4$ sans production substantielle concomitante de précipité solide. A cet effet, la quantité de composition (0) mise en contact avec le $TiCl_4$ prétraité est telle que le rapport atomique entre l'aluminium contenu dans la composition (0) et le titane contenu dans le $TiCl_4$ prétraité est généralement de 0,05 à 10, de préférence de 0,2 à 2.

La température à laquelle est opérée la mise en contact entre la composition (0) et le $TiCl_4$ prétraité varie généralement de 0 à 60 °C, de préférence de 10 à 40 °C.

Pour la préparation des solides catalytiques selon l'invention, le matériau liquide obtenu comme indiqué ci-dessus doit être transformé en particules solides. A cet effet, ledit matériau subit un traitement thermique, généralement d'une durée de 5 à 150 minutes, en présence d'un composé halogéné (3) tel que défini ci-avant de manière à induire la précipitation substantielle de particules de solide à base de trichlorure de titane complexé.

A cet effet, le matériau liquide est porté progressivement, de manière continue ou en observant des paliers successifs, à une température qui ne dépasse pas le point d'ébullition du matériau liquide et qui varie le plus souvent de 80 à 120 °C.

Le composé halogéné (3) préféré pour la préparation des composés (a2) est le tétrachlorure de titane. Il peut être ajouté au matériau liquide à n'importe quel moment du traitement thermique.

En particulier lorsqu'il est fait usage de $TiCl_4$ à titre de composé halogéné (3), ce $TiCl_4$ peut avantageusement provenir d'un excès non réduit du $TiCl_4$ initial à partir duquel les solides catalytiques selon l'invention sont préparés.

La quantité de composé halogéné (3) mise en oeuvre, exprimée par rapport à la quantité de trichlorure de titane présente dans le matériau liquide, est généralement de 0,1 à 20 moles de composé halogéné (3) par mole de trichlorure de titane.

Les particules de solide ainsi obtenues peuvent alors être soumises à un mûrissage généralement effectué à la température atteinte à la fin du traitement thermique puis de préférence séparées de leur milieu de préparation et éventuellement lavées au moyen d'un diluant hydrocarboné inerte tel que décrit ci-avant et qui peut également être utilisé pour préparer le solide à base de trichlorure de titane complexé [composé (a2)].

D'autres détails en rapport avec les conditions opératoires dans lesquelles est effectuée la synthèse du composé (a2) sont décrits dans la demande de brevet belge 9001054 déposée le 8 novembre 1990.

Le composé (a2) ainsi obtenu est formé de particules solides de trichlorure de titane complexé de forme cristalline δ, de couleur généralement violette, de forme générale sensiblement sphérique, de distribution granulométrique étroite et de diamètre moyen compris entre 5 et 150 μm. Sa teneur en trichlorure de titane est généralement supérieure à 50 % de son poids et sa teneur en composé électrodonneur généralement inférieure à 15 % en poids par rapport au poids total des particules.

La porosité des particules de composés (a2) dépend du choix des conditions opératoires de leur préparation. Il a ainsi été constaté, en particulier, toutes autres conditions restant sensiblement inaltérées, que l'augmentation de la teneur en groupements Z de la composition (0) conduit à une modification de la porosité des particules de solide catalytique et en particulier à un accroissement du volume poreux interne de ces particules généré par des pores dont le rayon varie de 1000 à 15000 Å (appelée ci-après plus simplement VPI). Grâce au procédé de fabrication des solides catalytiques selon l'invention, il est donc possible d'ajuster leur porosité, notamment le VPI, depuis des valeurs aussi faibles que 0,02 $cm^3$/g environ jusqu'à des valeurs aussi élevées que 0,4 $cm^3$/g environ.

L'utilisation, dans les systèmes catalytiques selon l'invention, de composés (a2) de porosité élevée convient particulièrement bien pour la fabrication de copolymères séquencés très résistants aux chocs obtenus en incorporant dans un polymère du propylène préparé dans une première étape, des quantités importantes d'un élastomère du propylène préparé dans une deuxième étape.

En effet, l'accroissement de la porosité des composés (a2) dans la zone des rayons de pores décrite ci-avant conduit notamment à des polymères d'alpha-oléfines de porosité croissante, ce qui permet d'y incorporer des quantités élevées et croissantes de produits élastomériques sans rencontrer de problèmes de collage.

Un autre avantage de l'utilisation de ces composés (a2) est qu'ils conduisent à des polymères pour lesquels l'incorporation des additifs tels que les pigments ou les stabilisants est particulièrement aisée.

Diverses variantes peuvent être apportées à ce procédé d'obtention du composé (a2) sans sortir du cadre de ce dernier.

Une première variante de réalisation (i) consiste à ajouter, au milieu de préparation du solide catalytique à base de $TiCl_3$ complexé, à un moment quelconque, mais de préférence avant le traitement thermique du matériau liquide, un support organique ou inorganique (S) présentant une texture poreuse telle que les particules de solide à base de trichlorure de titane complexé se déposent à la surface du support (S) ou précipitent à l'intérieur des pores de cé dernier.

A titre d'exemples de support (S), on peut citer des polymères préformés, des oxydes de silicium, d'aluminium, de magnésium, de titane, de zirconium ainsi que des mélanges de ces oxydes.

Une seconde variante de réalisation (ii) consiste à soumettre les particules de solide catalytique à base de trichlorure de titane complexé de forme cristalline δ, éventuellement préparées en présence du support (S), à un traitement de prépolymérisation tel que décrit ci-avant en rapport avec les composés du type (a1).

Une troisième variante de réalisation (iii) consiste à soumettre ces particules de solide catalytique à base de trichlorure de titane complexé, éventuellement préparées en présence du support (S), à un traitement d'activation identique à celui décrit précédemment pour l'obtention des constituants (a1).

Il est aussi possible de combiner les variantes (ii) et (iii) décrites ci-dessus, c'est-à-dire de soumettre les particules de solide catalytique, éventuellement préparées en présence du support (S), au traitement d'activation supplémentaire simultanément au traitement de "prépolymérisation".

On peut également combiner les variantes (ii) et (iii) en les réalisant successivement.

Des détails relatifs à ces variantes peuvent également être trouvés dans la demande de brevet BE9001054 (cf. BE-A-1003968).

Lorsque les systèmes catalytiques selon la présente invention contiennent un composé (a2) à titre de solide à base de trichlorure de titane complexé de forme cristalline δ, les quantités de composés (a2), (b) et (c) mises en oeuvre sont telles que le rapport molaire entre l'aluminium de (b) et le titane de (a2) varie de 1 à 50. Ces conditions sont en outre telles que le rapport molaire entre l'aluminium de (b) et le silicium de (c) varie de 0,1 à 50. En particulier, on obtient de bons résultats lorsque le rapport molaire entre l'aluminium de (b) et le titane de (a2) est supérieur ou égal à environ 1,5 et plus particulièrement supérieur ou égal à environ 2. Ce rapport molaire est en outre le plus souvent inférieur ou égal à environ 25, de préférence inférieur ou égal à environ 20. Les systèmes catalytiques de ce type présentant de bonnes performances ont en général un rapport molaire entre l'aluminium du composé (b) et le silicium du composé (c) supérieur ou égal à environ 1 et de préférence supérieur ou égal à environ 1,5. Ce rapport est le plus souvent inférieur ou égal à 20 plus particulièrement à environ 10 et de préférence inférieur ou égal à environ 5.

On peut utiliser des rapports molaires entre l'aluminium et le silicium élevés lorsque l'on souhaite obtenir des polymères d'isotacticité plus faibles. Ces polymères sont généralement obtenus en utilisant des rapports molaires entre l'aluminium de (b) et le silicium de (c) supérieurs à environ 4. Dans ce cas, ce rapport est généralement inférieur ou égal à environ 30 et de préférence inférieur ou égal à environ 25. Des procédés de polymérisation convenant particulièrement bien pour l'obtention de ces polymères d'isotacticité plus faible sont les procédés de polymérisation en phase gazeuse.

Les systèmes catalytiques ainsi définis s'appliquent à la polymérisation des oléfines à insaturation terminale telles que les alpha-oléfines dont la molécule contient de 2 à 18 et de préférence de 2 à 6 atomes de carbone et en particulier l'éthylène, le propylène, le 1-butène, le 1-pentène, les 1-méthylbutènes, l'hexène, les 3- et 4-méthyl-1-pentènes.

Par conséquent, la présente invention concerne également un procédé d'homo et/ou de copolymérisation mettant en oeuvre un ou plusieurs des monomères cités ci-avant dans des conditions de polymérisation en présence de l'un ou l'autre des systèmes catalytiques décrits ci-dessus. Un procédé de polymérisation particulièrement intéressant concerne la polymérisation stéréospécifique du propylène, du 1-butène et du 4-méthyl-1-pentène en polymères cristallins. Les systèmes catalytiques s'appliquent également à la copolymérisation de ces alpha-oléfines avec au moins un comonomère non identique choisi parmi les alpha-oléfines telles que décrites ci-dessus et les dioléfines comprenant de 4 à 18 atomes de carbone. De préférence, les dioléfines sont des dioléfines aliphatiques non conjuguées telles que l'hexadiène-1,4, des dioléfines monocycliques non conjuguées telles que le 4-vinyl-cyclohexène, des dioléfines alicycliques ayant un pont endocyclique telles que le dicyclopentadiène, le méthylène- et l'éthylydènenorbornène et des dioléfines aliphatiques conjuguées telles que le butadiène ou l'isoprène.

Ils s'appliquent encore à la fabrication de copolymères appelés à blocs qui sont constitués au départ d'alpha-oléfines et/ou de dioléfines. Ces copolymères à blocs consistent en des blocs distincts de composition variable; chaque bloc consiste en un homopolymère d'une alpha-oléfine ou en un copolymère statistique comprenant une alpha-oléfine et au moins un comonomère choisi parmi les alpha-oléfines et les dioléfines. Les alpha-oléfines et les dioléfines sont choisies parmi celles mentionnées ci-dessus.

Les systèmes catalytiques selon l'invention conviennent particulièrement bien pour la fabrication d'homopolymères du propylène et de copolymères de ce dernier contenant au total au moins 50 % en poids de propylène et de préférence au moins 60 % en poids de propylène.

Dans ce cas, généralement, la température de polymérisation varie de 20 à 200 °C et de préférence de 50 à 100 °C, les meilleurs résultats étant obtenus de 65 à 95 °C. La pression est choisie généralement entre la pression atmosphérique et 60 atmosphères et de préférence de 10 à 50 atmosphères. Cette pression peut être fonction de la température à laquelle s'effectue la polymérisation.

La polymérisation peut être effectuée en continu ou en discontinu.

La polymérisation peut être effectuée selon n'importe quel procédé connu : en solution ou en suspension dans un diluant hydrocarboné inerte, tel que ceux définis en rapport avec la préparation des composés (a). Le diluant utilisé préférentiellement lors de la polymérisation est généralement choisi parmi le butane, l'isobutane, l'hexane, l'heptane, le cyclohexane, le méthylcyclohexane ou leurs mélanges. On peut également opérer la polymérisation dans le monomère ou dans un des monomères maintenu à l'état liquide ou encore en phase gazeuse.

La quantité des différents composés des systèmes catalytiques selon l'invention mise en oeuvre pour cette polymérisation n'est pas critique pour autant que les rapports entre les différents composés (a), (b) et (c) soient respectés. On opère généralement de manière à ce que la quantité totale de composé organométallique (b) soit supérieure à 0,1 mmole par litre de diluant, de monomère liquide ou de volume de réacteur et de préférence supérieure ou égale à 0,5 mmole par litre.

Les composés (a), (b) et (c) sont généralement ajoutés séparément au milieu de polymérisation. L'ordre d'introduction de ces composés n'est pas critique. Il peut cependant s'avérer avantageux d'introduire le composé (a) en dernier lieu.

On peut également effectuer un précontact entre le composé (b) et le composé (c) ou entre le composé (a) et l'un ou l'autre des composés (b) et (c) ou encore entre ces trois composés avant de les mettre en oeuvre pour la polymérisation.

Un tel précontact est généralement effectué à une température variable de -40 à +80 °C pendant une durée qui est dépendante de cette température et qui peut aller de quelques secondes à plusieurs heures voire plusieurs jours.

Toutefois, lorsque le précontact fait intervenir le composé (a), on préfère limiter la durée du précontact à quelques secondes voire quelques minutes.

La masse moléculaire moyenne des polymères fabriqués selon le procédé de l'invention peut être réglé par addition au milieu de polymérisation d'un ou plusieurs agents de réglage de la masse moléculaire moyenne comme l'hydrogène, le diéthylzinc, les alcools, les éthers et les halogénures d'alkyle. L'hydrogène convient bien.

Les systèmes catalytiques selon l'invention peuvent préférentiellement être utilisés pour la production, avec des rendements particulièrement élevés de polymères du propylène présentant une large gamme de stéréospécificité.

En outre, les systèmes catalytiques sont particulièrement bien adaptés à la polymérisation du propylène à haute température. On observe, dans ces conditions, des rendements de polymérisation particulièrement élevés sans diminution importante de la stéréospécificité.

L'utilisation des systèmes catalytiques selon l'invention permet l'obtention, avec de bons rendements, de polymères contenant une quantité de chlore plus faible que celle mesurée sur les polymères issus de systèmes catalytiques à base de trichlorure de titane traditionnels. De ce fait, les polymères obtenus sont plus stables et leur mise en oeuvre n'entraîne pas de phénomènes de corrosion des dispositifs utilisés à cette fin. En outre, la stabilisation de ces polymères nécessite de moins grandes quantités d'additifs ce qui constitue non seulement un avantage économique mais permet également d'utiliser lesdits polymères dans les applications où une grande pureté est requise.

Les systèmes catalytiques selon l'invention permettent aussi, lorsqu'ils sont utilisés dans des procédés de polymérisation en phase gazeuse, d'éviter la formation, dans le réacteur de polymérisation ou dans le dispositif de circulation des monomères gazeux, de polymères de faible masse moléculaire se présentant sous forme d'huiles visqueuses ou semi-solides susceptibles de perturber le bon fonctionnement du réacteur de polymérisation. Une telle utilisation des systèmes catalytiques selon l'invention est dès lors particulièrement favorable.

Enfin, les systèmes catalytiques selon l'invention permettent d'obtenir avec de très bons rendements des polymères du propylène de très haute masse moléculaire moyenne. Selon la présente invention, on entend désigner par polymères du propylène de très haute massé moléculaire, les polymères du propylène dont la masse moléculaire moyenne en poids ($M_W$) est d'au moins $1{,}0\ 10^6$ g/mole et peut atteindre des valeurs aussi élevées que $1{,}2\ 10^6$ g/mole. Les polymères du propylène de ce type susceptibles d'être obtenus dans les procédés de polymérisation selon l'invention sont les homopolymères du propylène ainsi que les copolymères de ce dernier tels que définis ci-avant. Ces polymères sont obtenus avec de bons rendements dans les divers procédés de polymérisation lorsque le milieu de polymérisation ne contient pas d'agent de réglage de la masse moléculaire.

Les exemples suivants servent à illustrer l'invention.

La signification des symboles utilisés dans ces exemples, les unités exprimant les grandeurs mentionnées et les méthodes de mesure de ces grandeurs sont explicitées ci-dessous.

VPI = volume poreux interne du solide catalytique relevé dans la zone des rayons de pores compris entre 1000 et 15000 Å et exprimé en $cm^3/g$ mesuré par la méthode de pénétration au mercure au moyen de porosimètres commercialisés par la firme Carlo Erba Co.

act. = activité catalytique exprimée conventionnellement en grammes de polymère obtenus par heure et par gramme de $TiCl_3$ contenu dans le solide catalytique. Cette activité est appréciée indirectement à partir de la détermination de la teneur résiduelle en titane dans le polymère par fluorescence X.

PSA = poids spécifique apparent du polymère insoluble exprimé en $g/dm^3$.

fTri = indice d'isotacticité du polymère, apprécié par la fraction molaire de triades isotactiques (enchaînement séquencé de trois unités monomériques de propylène en configuration méso) dans le polymère total. Cette valeur est déterminée par résonance magnétique nucléaire en $^{13}C$ comme décrit dans Macromolecules, volume 6, n° 6, pages 925-926 (1973) et dans les références (3) à (9) de cette publication.

I.I. = indice d'isotacticité du polymère, apprécié par la fraction de ce dernier, exprimée en % en poids par rapport à la quantité totale de polymère recueilli, qui est insoluble dans l'heptane bouillant.

MFI = indice de fluidité en fondu mesuré sous une charge de 2,16 kg à 230 °C et exprimé en g/10 min (norme ASTM D 1238).

η = viscosité intrinsèque du polymère mesurée en solution dans de la tétraline à 140 °C et exprimée en g/dl.

$M_W$ = masse moléculaire moyenne en poids exprimée en g/mole et mesurée par chromatographie d'exclusion stérique dans le 1,2,4-trichlorobenzène, à 135°C, sur un chromatographe WATERS type 150C.

TEAL = triéthylaluminium.

TBAL = tributylaluminium.

DIBDMS = di-isobutyldiméthoxysilane.
DPDMS = diphényldiméthoxysilane.
Et = radical éthyle ou $C_2H_5$-.
Isoamyl = radical isoamyle ou $(CH_3)_2CH$-$CH_2$-$CH_2$-.

## Exemple 1

L'exemple 1 illustre un système catalytique selon l'invention contenant, à titre de solide à base de $TiCl_3$ complexé de forme cristalline $\delta$, un composé (a1) n'ayant subi aucun traitement de prépolymérisation ou d'activation.

### A - Préparation du composé (a1)

Dans un réacteur de 800 ml équipé d'un agitateur à 2 pales tournant à 400 tours/min, on introduit sous atmosphère d'azote 90 ml d'hexane sec et 60 ml de $TiCl_4$ pur. Cette solution hexane-$TiCl_4$ est refroidie à 0 ($\pm$ 1) °C. Endéans 4 h on y additionne une solution constituée de 190 ml d'hexane et de 70 ml de chlorure de diéthylaluminium (DEAC) en maintenant la température de 0 ($\pm$ 1) °C dans le réacteur.

Après addition de la solution de DEAC-hexane, le milieu de réaction constitué par une suspension de fines particules est maintenu sous agitation à 1 ($\pm$ 1) °C pendant 15 min, puis est porté en 1 h à 25 °C et maintenu 1 h à cette température et ensuite porté en 1 h environ à 65 °C. Le milieu est maintenu sous agitation pendant 2 h à 65 °C.

La phase liquide est alors séparée du solide et le produit solide est lavé par de l'hexane sec.

Le solide réduit ainsi obtenu est mis en suspension dans 456 ml de diluant (hexane) et on y ajoute 86 ml d'éther diisoamylique (EDIA). La suspension est agitée à 250 tr/min pendant 1 h à 50 °C puis décantée. Après avoir éliminé le surnageant, on remet le solide en suspension dans 210 ml d'hexane et on y ajoute 52 ml de $TiCl_4$. La suspension est ensuite maintenue sous agitation (150 tr/min) à 75 °C pendant 2 h. La phase liquide est ensuite éliminée par filtration et le solide à base de trichlorure de titane complexé est lavé par de l'hexane sec puis séché dans un lit fluidisé sous azote à 70 °C.

Le solide catalytique ainsi obtenu, de couleur violette, contient, par kg, 875 g de $TiCl_3$ de forme cristalline $\delta$ et 85 g d'EDIA.

### B - Polymérisation du propylène en suspension dans le monomère liquide (Conditions de référence)

Dans un autoclave de 5 l, préalablement séché, on introduit sous balayage d'azote sec :

- 228 mg (2 mmoles) de TEAL (sous forme d'une solution dans l'hexane à 200 g/l);
- 176,8 mg de DIBDMS (sous forme d'une solution dans l'hexane à 0,384 mole/l);
- 59 mg du composé (al) tel que préparé à l'étape A;
- une pression d'hydrogène d'environ 1 bar;
- 3 l de propylène liquide;

de manière à ce que le rapport molaire entre l'aluminium du TEAL et le titane du composé (a1) soit égal à 6 et que le rapport molaire entre l'aluminium du TEAL et le silicium du DIBDMS soit égal à 2,3.

On maintient le réacteur à 80 °C sous agitation pendant 2 heures. Ensuite, on dégaze le propylène excédentaire et on récupère le polymère formé, soit 664 g de polypropylène sec contenant 18 ppm de titane, 40 ppm de chlore et présentant les caractéristiques suivantes :

PSA = 467;
fTri = 93;
I.I. = 96,3;
MFI = 0,44.

L'activité $\alpha$ du composé (a1) est de 8626.

### Exemple comparatif 2R

Cet exemple illustre la polymérisation du propylène au moyen d'un système catalytique contenant 70 mg du composé (a1) décrit à l'exemple 1 et 480 mg de chlorure de diéthylaluminium (DEAC).

L'essai de polymérisation dans le propylène liquide (3 h, 80 °C) permet l'obtention, avec une activité de 3700, d'un polymère contenant 28 ppm de titane, 270 ppm de chlore et présentant les caractéristiques suivantes :

PSA = 480;
I.I. = 95,8;
MFI = 2,5.

La comparaison de cet exemple et de l'exemple 1 montre clairement que les systèmes catalytiques selon l'invention sont particulièrement actifs. En outre les systèmes catalytiques selon l'invention conduisent, à productivité égale, à un polymère contenant environ 4,3 fois moins de chlore.

Exemples 3 à 10R

Les exemples 3 à 10R suivants illustrent des systèmes catalytiques contenant des composés (a1) ayant subi une prépolymérisation et un traitement d'activation. Les exemples 3 à 6, 8 et 9 sont réalisés selon l'invention. Les exemples 7R et 10R sont des exemples de comparaison.

Exemples 3 et 4

A - Préparation du composé (a1)

On prépare un solide à base de trichlorure de titane complexé comme décrit à l'exemple 1. Toutefois, après le traitement de la suspension de solide réduit sous agitation pendant 2 heures à 65 °C et refroidissant à environ 55 °C, on introduit, dans le ciel gazeux du réacteur, du propylène sous une pression de 2 bars. Cette introduction est poursuivie pendant un temps suffisant (environ 45 min) pour obtenir, par kg de solide final, 65 g de propylène polymérisé. La suspension du solide ainsi prépolymérisé est ensuite refroidie à 40 °C et lavée avec de l'hexane sec. La préparation est ensuite poursuivie comme indiqué à l'exemple 1, partie A.

Le solide à base de $TiCl_3$ complexé ainsi obtenu est alors remis en suspension dans de l'hexane (à raison de 4 ml d'hexane par gramme de solide) et mis en contact avec 120 ml d'une solution contenant, par litre d'hexane, 80 g de DEAC et 176,2 g de 3-(3',5'-di-tert-butyl-4'-hydroxyphényl)propionate de n-octadécyle commercialisé sous la dénomination IRGANOX 1076 par CIBA-GEIGY.

La suspension ainsi additionnée est maintenue pendant 1 heure à 30 °C sous agitation.

Après décantation, le solide catalytique activé résultant est lavé par de l'hexane sec, avec remise en suspension du solide.

Le solide catalytique activé ainsi obtenu contient, par kg, 720 g de $TiCl_3$, et 40 g d'EDIA.

B - Polymérisation du propylène en suspension dans le monomère liquide

Les caractéristiques des systèmes catalytiques utilisés, sont repris dans le Tableau I, de même que les résultats des essais de polymérisation (conditions de référence) effectués en présence de ce composé (a1).

Tableau I

| Exemples | 3 | 4 |
|---|---|---|
| Systèmes catalytiques | | |
| composé (b) | TEAL | |
| composé (c) | DIBDMS | |
| quantité de (b) (mmole) | 2 | 2 |
| Rapport molaire Al/Ti | 4,6 | 11,4 |
| Rapport molaire Al/Si | 1,8 | 2,0 |
| Résultats en polymérisation | | |
| act. | 9703 | 6750 |
| PSA | 502 | 494 |
| fTri | 92 | 93 |
| I.I. | 97,9 | 97,4 |
| MFI | 0,2 | 1,7 |
| Cl dans le polymère (ppm) | 36 | 51 |

Exemple 5

L'exemple 5 illustre l'obtention de polypropylène de haut poids moléculaire au moyen du composé (a1) décrit à l'exemple 3. La polymérisation est effectuée dans les conditions de l'exemple 1, partie B mais en maintenant la température de polymérisation à 65 °C pendant 2 h et en omettant d'introduire de l'hydrogène. Les caractéristiques de cet essai sont reprises dans le tableau II ci-après.

Tableau II

| Exemples | 5 |
|---|---|
| Systèmes catalytiques | |
| composé (b) | TEAL |
| composé (c) | DIBDMS |
| quantité de (b) (mmole) | 2 |
| Rapport molaire Al/Ti | 8,6 |
| Rapport molaire Al/Si | 2,0 |
| Résultats de polymérisation | |
| act. | 5544 |
| PSA | 490 |
| fTri | 90 |
| I.I. | 95,8 |
| MFI | non mesurable |
| $\eta$ | 1,07 |
| Mw | 1175000 |

Exemple 6 et exemple 7R (donné à titre de comparaison)

Ces exemples illustrent l'utilisation de différents composés du silicium dans des essais de polymérisation tels que décrits à l'exemple 5 (65 °C - 2 h) mais en introduisant environ 1 bar d'hydrogène.
La composition des systèmes catalytiques et les résultats des essais de polymérisation sont repris dans le tableau III ci-après.

Tableau III

| Exemples | 6 | 7R |
|---|---|---|
| Systèmes catalytiques | | |
| composé (b) | TEAL | TEAL |
| composé (c) | DIBDMS | DPDMS |
| quantité de (b) (mmole) | 2 | 2 |
| Rapport molaire Al/Ti | 6,5 | 7,3 |
| Rapport molaire Al/Si | 2,0 | 2,0 |
| Résultats de polymérisation | | |
| act. | 4704 | 3528 |
| PSA | 472 | 436 |
| fTri | 92 | 91 |
| I.I. | 95,2 | 93,8 |
| MFI | 3,7 | 2,8 |

Exemples 8 et 9

Ces exemples illustrent la polymérisation du propylène au moyen de systèmes catalytiques contenant un trialkylaluminium [composé (b)] dont les radicaux alkyles contiennent plus de 2 atomes de carbone.
Les caractéristiques de ces systèmes catalytiques ainsi que les résultats des essais de polymérisation réalisés dans les conditions de l'exemple 1, partie B, sont repris dans le tableau IV ci-après.

Tableau IV

| Exemples | 8 | 9 |
|---|---|---|
| Systèmes catalytiques | | |
| composé (b) | TBAL | TBAL |
| composé (c) | DIBDMS | DIBDMS |
| quantité de (b) (mmole) | 2 | 2 |
| Rapport molaire Al/Ti | 8,5 | 15 |
| Rapport molaire Al/Si | 3,3 | 3,2 |
| Résultats en polymérisation | | |
| act. | 10720 | 11516 |
| PSA | 498 | 487 |
| fTri | 90 | 89 |
| I.I. | 96,6 | 95,5 |
| MFI | 0,6 | 1,9 |
| Cl dans le polymère (ppm) | 32 | 30 |

### Exemple 10R

L'exemple 10R illustre la polymérisation du propylène dans des conditions identiques à celles de l'exemple 5 mais au moyen d'un système catalytique contenant 2,1 mmoles (240 mg) de TEAL (composé b) et 42 mg de composé (a1) décrit à l'exemple 4, soit 0,19 mmole de $TiCl_3$.

Cet essai permet de recueillir avec une activité 5971 un polymère collant non manipulable.

On peut déduire de la comparaison des exemples 3 à 9 avec l'exemple 10R que la présence, dans les systèmes catalytiques selon l'invention, du composé oxygéné organique du silicium conduit à l'obtention de polymères stéréospécifiques.

### Exemples 11 à 15R

Ces exemples sont destinés à illustrer les systèmes catalytiques selon l'invention contenant un composé (a2) à titre de solide à base de trichlorure de titane complexé de forme cristalline δ. Les exemples 11, 12 et 14 sont réalisés selon l'invention et les exemples 13R et 15R sont donnés à titre de comparaison.

### Exemple 11

A - Préparation du solide catalytique [composé (a2)]

La composition (0) est obtenue par mélange, sous atmosphère inerte et à 50 °C, de 800 ml d'ISOPAR H (mélange d'hydrocarbures aliphatiques bouillant à 175 °C commercialisé par EXXON CHEMICALS), 170 ml de DEAC et de 82 ml d'alcool isoamylique. Cette composition (0) de formule empirique Al $Et_{1,45}$ (0 $R^4)_{0,55}$ Cl où $R^4$ représente un radical Isoamyl est conservée à température ambiante et sous balayage d'azote pendant 16 heures avant son utilisation.

Dans un réacteur sec de 5 l équipé d'un agitateur à une pale tournant à 220 tr/min, on introduit 1 l d'ISOPAR H et 150 ml de $TiCl_4$. Cette solution de $TiCl_4$ étant maintenue à 30 °C, on introduit lentement (30 minutes) 690 ml d'EDIA suivis de 970 ml de la composition (0) décrite ci-avant. L'introduction de la composition (0) se fait pendant 60 minutes. Après avoir réduit la vitesse d'agitation à 85 tr/min, on introduit, tout en augmentant la température pour atteindre 100 °C après 50 minutes, 450 ml de $TiCl_4$ en 20 minutes. La suspension est maintenue à 100 °C pendant deux heures et le solide formé est isolé par décantation puis lavé 7 fois avec 2 l d'hexane sec.

Ce solide catalytique de couleur violacée contient, par kg, 830 g de $TiCl_3$, 1 g d'aluminium et 58 g d'EDIA; son VPI est de 0,095 $cm^3$/g.

La totalité de ce solide (soit environ 317 g de solide à base de $TiCl_3$ complexé) est mise en suspension dans 1,8 l d'hexane à 30 °C, sous une agitation de 150 tr/min.

On introduit lentement (30 minutes) 780 ml d'une solution d'hexane contenant, par litre, 80 g de DEAC et 176 g d'IRGANOX 1076 puis 240 ml de propylène en 30 minutes. La suspension est maintenue sous agitation pendant 30 minutes supplémentaires.

Après décantation, le solide catalytique prépolymérisé résultant est lavé par de l'hexane sec, avec remise en suspension du solide puis séché par balayage d'azote en lit fluidisé pendant 2 heures à 70 °C. Le solide ainsi obtenu contient 535 g de TiCl$_3$, 18 g d'EDIA et 228 g de propylène prépolymérisé.

On constate que cette préparation du composé (a) particulièrement simple se déroule en une seule étape.

B - Polymérisation du propylène en suspension dans le monomère liquide

Dans un autoclave de 5 l, préalablement séché, on introduit sous balayage d'azote sec :

- 228 mg (2 mmole) de TEAL (sous forme d'une solution dans l'hexane contenant 200 g/l) commercialisé par la firme SCHERING;
- 202,8 mg de DIBDMS (sous forme d'une solution dans l'hexane contenant 0,384 mole/l);
- 67,7 mg du composé (a2) tel que préparé ci-avant;
- une pression d'hydrogène d'environ 1 bar;
- 3 l de propylène liquide;

de manière à ce que le rapport molaire entre l'aluminium du TEAL et le titane du composé (a1) soit égal à 8,5 et que le rapport molaire entre l'aluminium du TEAL et le silicium du DIBDMS soit égal à 2.

On maintient le réacteur à 65 °C sous agitation pendant 4 heures. Après dégazage du propylène excédentaire, on récupère, avec une activité de 2673, un polymère de 343 de PSA ayant en outre un MFI de 6, un fTri de 92 et contenant 64,5 ppm de chlore.

Exemple 12

Cet exemple illustre la polymérisation du propylène maintenu à l'état gazeux. Le solide catalytique à base de trichlorure de titane complexé de forme cristalline δ [composé (a2)] est obtenu comme à l'exemple 11.

Dans un autoclave de 5 l utilisé selon l'exemple 1, partie B, on introduit sous courant d'azote et sous agitation :

- 106 mg (0,93 mmole) de TEAL;
- 38 mg (0,19 mmole) de DIBDMS;
- 90 mg du composé (a2) tel que préparé ci-avant, soit 48 mg de TiCl$_3$;
- 1 l de propylène liquide.

On élève alors la température jusqu'à 50 °C et on polymérise dans ces conditions pendant 10 minutes. L'autoclave est ensuite dégazé à une pression de 11 bars absolus tout en étant chauffé jusqu'à 75 °C. A cette température, on introduit consécutivement dans l'autoclave de l'hydrogène puis du propylène à l'état gazeux jusqu'à atteindre une pression totale à la température considérée de 20 bars absolus. Après 3 heures de polymérisation dans ces conditions, on arrête la réaction par introduction de 25 ml d'une solution à 1 mole/l de soude caustique.

L'activité du composé (a2) est de 2870; le PSA du polymère est de 343, son MFI est de 0,83 et son fTri est de 92.

Exemple 13R

Cet exemple illustre la polymérisation du propylène en phase gazeuse au moyen d'un système catalytique contenant 60 mg d'un composé (a2) tel que décrit à l'exemple 11 et 250 mg de DEAC.

L'essai de polymérisation effectué dans les conditions de l'exemple 12 conduit, avec une activité de 1833 à un polymère contenant 42 ppm de titane, 540 ppm de chlore et dont les autres caractéristiques sont :

PSA = 344;
MFI = 6;
fTri = 95.

La comparaison de l'exemple 13R avec l'exemple 12 effectué selon l'invention montre à nouveau que les systèmes catalytiques selon l'invention sont particulièrement actifs et qu'ils conduisent à des polymères particulièrement pauvres en chlore.

Exemple 14

Le solide catalytique à base de trichlorure de titane complexé de forme cristalline δ utilisé dans le système catalytique de cet exemple est un composé (a2) déposé dans un support.

A - Préparation du composé (a2)

La composition (0) est obtenue par introduction successive, dans un ballon de 1 litre, préalablement purgé à l'azote, de 300 ml d'ISOPAR H, 43,2 ml de DEAC et 20 ml de Al(O R$^4$)EtCl où R$^4$ représente le radical isoamyl (obtenu préalablement par mélange équimolaire de DEAC et d'alcool isoamylique).

Dans un autoclave de 5 litres muni d'un agitateur à une pale tournant à 250 tr/min, conditionné sous azote, on introduit successivement 1600 ml d'ISOPAR H, 200 ml de TiCl$_4$, 230 ml d'EDIA et 310 g d'un support de silice (commercialisé par la firme GRACE sous la dénomination SG 532). Cette suspension étant maintenue à 30 °C, on y additionne endéans l'heure 363 ml de la composition (0) décrite ci-avant. On augmente alors la température pour atteindre 100 °C après 1 h.

Le milieu réactionnel est maintenu à cette température pendant deux heures puis ramené à température ambiante.

On introduit lentement (30 minutes) 780 ml d'une solution d'hexane contenant, par litre, 80 g de DEAC puis 240 ml de propylène en 30 minutes. La suspension est maintenue sous agitation pendant 30 minutes supplémentaires.

Après décantation, le solide catalytique prépolymérisé résultant est lavé par de l'hexane sec, avec remise en suspension du solide après chaque lavage, puis séché par balayage d'azote en lit fluidisé pendant 2 heures à 70 °C. Ce composé (a2) contient, par kg, 341 g de TiCl$_3$. Son VPI est de 0,08 cm$^3$/g.

B - Polymérisation du propylène en phase gazeuse

Soumis à un test de polymérisation identique à celui décrit à l'exemple 12, un système catalytique contenant 82 mg (0,72 mmole) de TEAL, 36,7 mg de DIBDMS et 98,5 mg de ce composé (a2) conduit avec une activité de 2199 à un polymère présentant un PSA de 413, un MFI non mesurable et un fTri de 93.

Exemple 15R

L'exemple 15R illustre la polymérisation du propylène dans des conditions identiques à celles de l'exemple 10R mais au moyen du composé (a2) préparé comme décrit à l'exemple 14.

le système catalytique mis en oeuvre contient 1,9 mmole de TEAL et 69,7 mg du composé (a2) soit 23,7 mg de TiCl$_3$.

Cet essai permet de recueillir, avec une activité de 3981, un polymère collant non manipulable.

La comparaison des exemples 11, 12 et 14 avec l'exemple 15R permet de mettre en évidence le rôle joué, dans les systèmes catalytiques selon l'invention, par le composé oxygéné organique du silicium.

Exemple 16

Cet exemple illustre la polymérisation du propylène dans un diluant hydrocarboné inerte (hexane) au moyen d'un système catalytique contenant un composé (a1) préparé comme à l'exemple 3, du TEAL et du dicyclopentyl diméthoxysilane (DCPDMS) à titre de composé (c).

La polymérisation est effectuée selon le mode opératoire suivant.

Dans un autoclave de 5 l, préalablement séché, on introduit sous balayage d'azote sec :

- 1 l d'hexane;
- 157 mg de TEAL;
- 153 mg de DCPDMS;
- 48 mg du composé (a1);

Les rapports molaires Al/Ti et Al/Si sont respectivement égaux à 7 et à 2.

La température étant élevée jusqu'à 70°C, on introduit successivement :

- une pression d'hydrogène d'environ 1 bar; et
- une pression de 20 bars de propylène

avant d'effectuer la polymérisation à cette température en maintenant la pression constante par alimentation de propylène.

Après 3 heures, la polymérisation est arrêtée par addition de 250 ml d'eau contenant 25 mmole de soude. Le polymère est recueilli sous forme d'une suspension qui est filtrée. La fraction de polymère solide est séchée et la fraction de polymère soluble dans l'hexane de polymérisation est récupérée par évaporation.

Le polymère ainsi obtenu a un PSA de 499 et un MFI de 1,1. L'activité du composé (a1) dans cet essai est de 3393. La fraction de polymère soluble dans l'hexane de polymérisation est de 1 % en poids par rapport au poids total de polymère formé.

**Revendications**

1. Système catalytique utilisable pour la polymérisation des alpha-oléfines comprenant au moins :

   - un solide à base de trichlorure de titane complexé de forme cristalline δ substantiellement exempt de magnésium obtenu par un procédé impliquant une réduction d'un composé de titane par un réducteur organoaluminique,
   - un composé organoaluminique non halogéné répondant à la formule :

   $$Al\ R_m\ Y_{3-m} \qquad (II)$$

   où :

   - R représente un radical hydrocarboné contenant de 1 à 18 atomes de carbone,
   - Y représente un groupement choisi parmi $-OR^1$, $-SR^1$ et $-NR^1R^2$ dans lequel $R^1$ et $R^2$ représentent chacun un radical hydrocarboné identique ou différent choisi parmi les radicaux alkyle, aryle, arylalkyle, alkylaryle et cycloalkyle,
   - m est un nombre tel que $0 < m \leq 3$,
   - un composé oxygéné organique du silicium choisi parmi les composés représentés par la formule générale :

   $$R'_n Si\ (OR'')_{4-n} \qquad (I)$$

   dans laquelle

   - R' représente un atome d'hydrogène ou un radical hydrocarboné contenant de 1 à 20 atomes de carbone, au moins un de ces substituants R' étant choisi parmi les radicaux alkyle et cycloalkyle contenant au moins un atome de carbone secondaire ou tertiaire,
   - R'' représente un radical hydrocarboné contenant de 1 à 3 atomes de carbone, identique ou différent de R',
   - n est un nombre entier égal à 2 ou 3,
   - les n radicaux R' et (4-n) radicaux R'' pouvant chacun indépendamment les uns des autres représenter des radicaux organiques identiques ou différents,

   tel que le rapport molaire entre l'aluminium du composé organoaluminique non halogéné et le titane du solide à base de trichlorure de titane complexé de forme cristalline δ varie de 1 à 50 et le rapport molaire entre l'aluminium du composé organoaluminique et le silicium du composé oxygéné organique du silicium varie de 0,1 à 50.

2. Système catalytique selon la revendication 1, **caractérisé en ce que** le composé organoaluminique non halogéné est choisi parmi les trialkylaluminiums et leurs mélanges.

3. Système catalytique selon la revendication 1 ou 2, **caractérisé en ce que** le composé oxygéné organique du silicium est choisi parmi les diméthoxy- et diéthoxysilanes substitués par au moins un radical alkyle ou cycloalkyle contenant en position α, β ou γ un atome de carbone secondaire ou tertiaire.

**4.** Système catalytique selon la revendication 3, dans lequel le composé oxygéné organique du silicium est choisi parmi le diisobutyldiméthoxysilane, le ditertiobutyldiméthoxysilane, le diisopropyldiméthoxysilane, le dicyclohexyldiméthoxysilane, le cyclohexylméthyldiméthoxysilane et l'isobutylméthyldiméthoxysilane.

**5.** Système catalytique selon l'une quelconque des revendications 1 à 4, **caractérisé en ce que** le solide à base de trichlorure de titane complexé de forme cristalline δ est obtenu par traitements successifs ou combinés du solide issu de la réduction de tétrachlorure ou de tétraalkoxyde de titane par un réducteur organoaluminique par un composé électrodonneur et par un composé halogéné.

**6.** Système catalytique utilisable pour la polymérisation des alpha-oléfines comprenant :

- un solide à base de trichlorure de titane complexé de forme cristalline δ et substantiellement exempt de magnésium obtenu par traitements successifs ou combinés du solide issu de la réduction de tétrachlorure ou de tétraalkoxyde de titane par un réducteur organoaluminique par un composé électrodonneur et par un composé halogéné et ayant subi un traitement de prépolymérisation consistant à le mettre en contact avec une alpha-oléfine dans des conditions polymérisantes et un traitement d'activation consistant à le mettre en contact avec un agent d'activation choisi parmi les composés organoaluminiques et les produits de la réaction d'un composé organoaluminique avec un composé choisi parmi les composés hydroxyaromatiques dont le groupe hydroxyle est stériquement bloqué ;
- un composé organoaluminique qui est le triéthylaluminium, et
- un composé oxygéné organique du silicium qui est le dicyclopentyldiméthoxysilane,

  tel que le rapport molaire entre l'aluminium du composé organoaluminique non halogéné et le titane du solide à base de trichlorure de titane complexé de forme cristalline δ varie de 1 à 50 et le rapport molaire entre l'aluminium du composé organoaluminique et le silicium du composé oxygéné organique du silicium varie de 0,1 à 50.

**7.** Système catalytique selon la revendication 5, dans lequel le solide à base de trichlorure de titane complexé de forme cristalline δ a été activé par mise en contact avec un agent d'activation choisi parmi les composés organoaluminiques.

**8.** Système catalytique selon la revendication 5, dans lequel le solide à base de trichlorure de titane complexé de forme cristalline δ a été activé par mise en contact avec un agent d'activation choisi parmi les produits de réaction d'un composé organoaluminique avec un composé choisi parmi les composés hydroxyaromatiques dont le groupe hydroxyle est stériquement bloqué.

**9.** Système catalytique selon l'une quelconque des revendications 1 à 4, **caractérisé en ce que** le solide à base de trichlorure de titane complexé de forme cristalline δ est obtenu par traitement thermique, en présence d'un agent halogéné, du matériau liquide résultant de la mise en contact de $TiCl_4$, prétraité par un composé électrodonneur, avec une composition (O) correspondant à la formule générale :

$$Al\ R_p\ Z_q X_{3-(p+q)} \qquad\qquad (V)$$

  dans laquelle

- R représente un radical hydrocarboné contenant de 1 à 18 atomes de carbone,
- Z représente un groupement choisi parmi $-OR^4$, $-SR^4$ et $-NR^4R^5$ dans lesquels $R^4$ et $R^5$ représentent chacun un radical hydrocarboné ou un atome d'hydrogène,
- X représente un atome halogène,
- p est un nombre quelconque tel que $0 < p < 3$,
- q est un nombre quelconque tel que $0 < q < 3$,

  la somme (p + q) étant telle que $0 < (p + q) \leq 3$.

**10.** Système catalytique selon la revendication 9, **caractérisé en ce que** le solide à base de trichlorure de titane complexé de forme cristalline δ est obtenu en ajoutant au milieu de préparation dudit solide, à un moment quelconque, un support (S) organique ou inorganique présentant une texture poreuse.

**11.** Système catalytique selon l'une quelconque des revendications 9 à 10, **caractérisé en ce que** le solide à base de trichlorure de titane complexé de forme cristalline δ a été activé par mise en contact avec un agent d'activation choisi parmi les composés organoaluminiques et les produits de la réaction d'un composé organoaluminique avec un composé choisi parmi les composés hydroxyaromatiques dont le groupe hydroxyle est stériquement bloqué.

**12.** Système catalytique selon l'une quelconque des revendications 1 à 11, **caractérisé en ce que** le solide à base de trichlorure de titane complexé de forme cristalline δ a été soumis, à un moment quelconque de sa préparation, à un traitement de prépolymérisation avec une alpha-oléfine.

**13.** Système catalytique selon l'une quelconque des revendications 5 à 8, **caractérisé en ce que** le rapport molaire entre l'aluminium du composé organoaluminique non halogéné et le titane du solide à base de trichlorure de titane complexé de forme cristalline δ varie de 1,5 à 20.

**14.** Système catalytique selon l'une quelconque des revendications 5 à 8, **caractérisé en ce que** le rapport molaire entre l'aluminium du composé organoaluminique non halogéné et le silicium du composé oxygéné organique du silicium varie de 1 à 5.

**15.** Système catalytique selon l'une quelconque des revendications 9 à 11, **caractérisé en ce que** le rapport molaire entre l'aluminium du composé organoaluminique non halogéné et le titane du solide à base de trichlorure de titane complexé de forme cristalline δ varie de 1,5 à 25.

**16.** Système catalytique selon l'une quelconque des revendications 9 à 11, **caractérisé en ce que** le rapport molaire entre l'aluminium du composé organoaluminique non halogéné et le silicium du composé oxygéné organique du silicium varie de 1 à 20.

**17.** Procédé pour la polymérisation des alpha-oléfines effectué en présence d'un système catalytique selon l'une quelconque des revendications 1 à 16.

**18.** Procédé selon la revendication 17 appliqué à la polymérisation du propylène.

**19.** Procédé selon la revendication 18 appliqué à la fabrication de polymères du propylène dont la masse moléculaire moyenne en poids est de $1,0 \cdot 10^6$ à $1,2 \cdot 10^6$ g/mole.

**20.** Polymères du propylène susceptibles d'être obtenus selon le procédé d'une quelconque des revendications 18 et 19.

**21.** Polymères du propylène dont la masse moléculaire moyenne en poids est de $1,0 \cdot 10^6$ g/mole à $1,2 \cdot 10^6$ g/mole susceptibles d'être obtenus selon le procédé de la revendication 18.

**Patentansprüche**

**1.** Katalytisches System, verwendbar für die Polymerisation von alpha-Olefinen, das wenigstens umfasst:

- einen Feststoff auf der Basis von komplexiertem Titantrichlorid mit δ-Kristallform, im Wesentlichen frei von Magnesium, erhalten durch ein Verfahren, das eine Reduktion einer Titanverbindung durch ein aluminiumorganisches Reduktionsmittel einschließt,
- eine nicht halogenierte aluminiumorganische Verbindung, die der Formel:

$$\text{Al } R_m Y_{3-m} \tag{II}$$

entspricht, worin:

- R einen Kohlenwasserstoffrest mit 1 bis 18 Kohlenstoffatomen darstellt,
- Y eine Gruppe darstellt, die ausgewählt ist unter $-OR^1$, $-SR^1$ und $NR^1R^2$, worin $R^1$ und $R^2$ jeweils einen gleichen oder verschiedenen Kohlenwasserstoffrest darstellen, der ausgewählt ist unter den Resten Alkyl, Aryl, Arylalkyl, Alkylaryl und Cycloalkyl,

- m eine Zahl ist, so dass $0 < m \leq 3$,
- eine organische sauerstoffhaltige Siliciumverbindung, die ausgewählt ist unter den Verbindungen, die durch die allgemeine Formel:

$$R'_n \, Si \, (OR'')_{4-n} \tag{I}$$

dargestellt werden, worin:

- R' ein Wasserstoffatom oder einen Kohlenwasserstoffrest mit 1 bis 20 Kohlenstoffatomen darstellt, wobei wenigstens einer dieser Substituenten R' unter den Alkylund Cycloalkylresten mit wenigstens einem sekundären oder tertiären Kohlenstoffatom ausgewählt ist,
- R'' einen Kohlenwasserstoffrest mit 1 bis 3 Kohlenstoffatomen darstellt, der gleich wie oder verschieden von R' ist,
- n eine ganze Zahl gleich 2 oder 3 ist,
- wobei die n Reste R' und die (4-n) Reste R'' jeder unabhängig voneinander gleiche oder verschiedene organische Reste darstellen können,

so dass das Molverhältnis zwischen dem Aluminium der nicht halogenierten aluminiumorganischen Verbindung und dem Titan des Feststoffs auf der Basis von komplexiertem Titantrichlorid mit $\delta$-Kristallform von 1 bis 50 variiert und das Molverhältnis zwischen dem Aluminium der aluminiumorganischen Verbindung und dem Silicium der organischen sauerstoffhaltigen Siliciumverbindung von 0,1 bis 50 variiert.

2. Katalytisches System gemäß Anspruch 1, **dadurch gekennzeichnet, dass** die nicht halogenierte aluminiumorganische Verbindung unter den Trialkylaluminiumverbindungen und deren Gemischen ausgewählt ist.

3. Katalytisches System gemäß Anspruch 1 oder 2, **dadurch gekennzeichnet, dass** die organische sauerstoffhaltige Siliciumverbindung ausgewählt ist unter den Dimethoxy- und Diethoxysilanen, die mit wenigstens einem Alkyl- oder Cycloalkylrest, der in $\alpha$-, $\beta$- oder $\gamma$-Position ein sekundäres oder tertiäres Kohlenstoffatom enthält, substituiert sind.

4. Katalytisches System gemäß Anspruch 3, worin die organische sauerstoffhaltige Siliciumverbindung ausgewählt ist unter Diisobutyldimethoxysilan, Di-tertbutyldimethoxysilan, Diisopropyldimethoxysilan, Dicyclohexyldimethoxysilan, Cyclohexylmethyldimethoxysilan und Isobutylmethyldimethoxysilan.

5. Katalytisches System gemäß einem der Ansprüche 1 bis 4, **dadurch gekennzeichnet, dass** der Feststoff auf der Basis von komplexiertem Titantrichlorid mit $\delta$-Kristallform durch aufeinanderfolgende oder kombinierte Behandlungen des Feststoffs, der aus der Reduktion von Titantetrachlorid oder -tetraalkoxid durch ein aluminiumorganisches Reduktionsmittel hervorgegangen ist, durch eine Elektronendonorverbindung und durch eine halogenierte Verbindung erhalten wird.

6. Katalytisches System, verwendbar für die Polymerisation von alpha-Olefinen, das umfasst:

- einen Feststoff auf der Basis von komplexiertem Titantrichlorid mit $\delta$-Kristallform und im Wesentlichen frei von Magnesium, erhalten durch aufeinanderfolgende oder kombinierte Behandlungen des Feststoffs, der aus der Reduktion von Titantetrachlorid oder -tetraalkoxid durch ein aluminiumorganisches Reduktionsmittel hervorgegangen ist, durch eine Elektronendonorverbindung und durch eine halogenierte Verbindung und unterzogen einer Vorpolymerisationsbehandlung, die darin besteht, ihn mit einem alpha-Olefin unter polymerisierenden Bedingungen in Kontakt zu bringen, und einer Aktivierungsbehandlung, die darin besteht, ihn mit einem Aktivierungsmittel in Kontakt zu bringen, das ausgewählt ist unter den aluminiumorganischen Verbindungen und den Produkten der Reaktion einer aluminiumorganischen Verbindung mit einer Verbindung, die ausgewählt ist unter den hydroxyaromatischen Verbindungen, deren Hydroxylgruppe sterisch blockiert ist,
- eine aluminiumorganische Verbindung, die Triethylaluminium ist, und
- eine organische sauerstoffhaltige Siliciumverbindung, die Dicyclopentyldimethoxysilan ist,

so dass das Molverhältnis zwischen dem Aluminium der nicht halogenierten aluminiumorganischen Verbindung und dem Titan des Feststoffs auf der Basis von komplexiertem Titantrichlorid mit δ-Kristallform von 1 bis 50 variiert und das Molverhältnis zwischen dem Aluminium der aluminiumorganischen Verbindung und dem Silicium der organischen sauerstoffhaltigen Siliciumverbindung von 0,1 bis 50 variiert.

7. Katalytisches System gemäß Anspruch 5, worin der Feststoff auf der Basis von komplexiertem Titantrichlorid mit δ-Kristallform durch Inkontaktbringen mit einem Aktivierungsmittel, das unter den aluminiumorganischen Verbindungen ausgewählt ist, aktiviert wurde.

8. Katalytisches System gemäß Anspruch 5, worin der Feststoff auf der Basis von komplexiertem Titantrichlorid mit δ-Kristallform durch Inkontaktbringen mit einem Aktivierungsmittel, das ausgewählt ist unter den Produkten der Reaktion einer aluminiumorganischen Verbindung mit einer Verbindung, die ausgewählt ist unter den hydroxyaromatischen Verbindungen, deren Hydroxylgruppe sterisch blockiert ist, aktiviert wurde.

9. Katalytisches System gemäß einem der Ansprüche 1 bis 4, **dadurch gekennzeichnet, dass** der Feststoff auf der Basis von komplexiertem Titantrichlorid mit δ-Kristallform erhalten wird durch thermische Behandlung in Gegenwart eines halogenierten Mittels des flüssigen Materials, das aus dem Inkontaktbringen von $TiCl_4$, das mit einer Elektronendonorverbindung vorbehandelt ist, mit einer Zusammensetzung (O) resultiert, die der allgemeinen Formel:

$$Al\,R_pZ_qX_{3-(p+q)} \tag{V}$$

entspricht, worin

- R einen Kohlenwasserstoffrest mit 1 bis 18 Kohlenstoffatomen darstellt,
- Z eine Gruppe darstellt, die ausgewählt ist unter $-OR^4$, $-SR^4$ und $NR^4R^5$, worin $R^4$ und $R^5$ jeweils einen Kohlenwasserstoffrest oder ein Wasserstoffatom darstellen,
- X ein Halogenatom darstellt,
- p eine beliebige Zahl ist, so das $0 < p < 3$,
- q eine beliebige Zahl ist, so dass $0 < q < 3$,

  wobei die Summe $(p + q)$ so ist, dass $0 < (p + q) \leq 3$.

10. Katalytisches System gemäß Anspruch 9, **dadurch gekennzeichnet, dass** der Feststoff auf der Basis von komplexiertem Titantrichlorid mit δ-Kristallform erhalten wird, indem man zu dem Herstellungsmedium besagten Feststoffs zu einem beliebigen Zeitpunkt einen organischen oder anorganischen Träger (S), der eine poröse Textur aufweist, hinzufügt.

11. Katalytisches System gemäß einem der Ansprüche 9 bis 10, **dadurch gekennzeichnet, dass** der Feststoff auf der Basis von komplexiertem Titantrichlorid mit δ-Kristallform durch Inkontaktbringen mit einem Aktivierungsmittel, das ausgewählt ist unter den aluminiumorganischen Verbindungen und den Produkten der Reaktion einer aluminiumorganischen Verbindung mit einer Verbindung, die ausgewählt ist unter den hydroxyaromatischen Verbindungen, deren Hydroxylgruppe sterisch blockiert ist, aktiviert wurde.

12. Katalytisches System gemäß einem der Ansprüche 1 bis 11, **dadurch gekennzeichnet, dass** der Feststoff auf der Basis von komplexiertem Titantrichlorid mit δ-Kristallform zu einem beliebigen Zeitpunkt seiner Herstellung einer Vorpolymerisationsbehandlung mit einem alpha-Olefin unterzogen wurde.

13. Katalytisches System gemäß einem der Ansprüche 5 bis 8, **dadurch gekennzeichnet, dass** das Molverhältnis zwischen dem Aluminium der nicht halogenierten aluminiumorganischen Verbindung und dem Titan des Feststoffs auf der Basis von komplexiertem Titantrichlorid mit δ-Kristallform von 1,5 bis 20 variiert.

14. Katalytisches System gemäß einem der Ansprüche 5 bis 8, **dadurch gekennzeichnet, dass** das Molverhältnis zwischen dem Aluminium der nicht halogenierten aluminiumorganischen Verbindung und dem Silicium der organischen sauerstoffhaltigen Siliciumverbindung von 1 bis 5 variiert.

15. Katalytisches System gemäß einem der Ansprüche 9 bis 11, **dadurch gekennzeichnet, dass** das Molverhältnis zwischen dem Aluminium der nicht halogenierten aluminiumorganischen Verbindung und dem Titan des Feststoffs auf der Basis von komplexiertem Titantrichlorid mit δ-Kristallform von 1,5 bis 25 variiert.

16. Katalytisches System gemäß einem der Ansprüche 9 bis 11, **dadurch gekennzeichnet, dass** das Molverhältnis zwischen dem Aluminium der nicht halogenierten aluminiumorganischen Verbindung und dem Silicium der organischen sauerstoffhaltigen Siliciumverbindung von 1 bis 20 variiert.

17. Verfahren für die Polymerisation von alpha-Olefinen, das in Gegenwart eines katalytischen Systems gemäß einem der Ansprüche 1 bis 16 ausgeführt wird.

18. Verfahren gemäß Anspruch 17, angewandt auf die Polymerisation von Propylen.

19. Verfahren gemäß Anspruch 18, angewandt auf die Herstellung von Propylenpolymeren, deren Gewichtsmittel der Molekülmasse $1,0 \cdot 10^6$ bis $1,2 \cdot 10^6$ g/mol beträgt.

20. Propylenpolymere, die gemäß dem Verfahren eines der Ansprüche 18 und 19 erhalten werden können.

21. Propylenpolymere, deren Gewichtsmittel der Molekülmasse $1,0 \cdot 10^6$ g/mol bis $1,2 \cdot 10^6$ g/mol beträgt, die gemäß dem Verfahren des Anspruchs 18 erhalten werden können.

**Claims**

1. Catalytic system which can be used for the polymerization of α-olefins comprising at least:

   - one solid based on complexed titanium trichloride of δ crystalline form substantially devoid of magnesium obtained by a process involving a reduction of a titanium compound by an organoaluminium reducing agent,
   - one non-halogenated organoaluminium compound corresponding to the formula:

$$AlR_mY_{3-m} \qquad (II)$$

   where:

   - R represents a hydrocarbonaceous radical comprising from 1 to 18 carbon atoms,
   - Y represents a group chosen from $-OR^1$, $-SR^1$ and $-NR^1R^2$ in which $R^1$ and $R^2$ each represent an identical or different hydrocarbonaceous radical chosen from alkyl, aryl, arylalkyl, alkylaryl and cycloalkyl radicals,
   - m is a number such that $0 < m \leq 3$,
   - one organic oxygenated silicon compound chosen from the compounds represented by the general formula:

$$R'_nSi(OR'')_{4-n} \qquad (I)$$

   in which

   - R' represents a hydrogen atom or a hydrocarbonaceous radical comprising from 1 to 20 carbon atoms, at least one of these R' substituents being chosen from alkyl and cycloalkyl radicals comprising at least one secondary or tertiary carbon atom,
   - R'' represents a hydrocarbonaceous radical, identical to or different from R', comprising from 1 to 3 carbon atoms,
   - n is an integer equal to 2 or 3,
   - it being possible for the n R' radicals and (4-n) R'' radicals each, independently of one another, to represent identical or different organic radicals,

   such that the molar ratio of the aluminium of the non-halogenated organoaluminium compound to the titanium of the solid based on complexed titanium trichloride of δ crystalline form varies from 1 to 50 and the molar ratio of the aluminium of the organoaluminium compound to the silicon of the organic oxygenated silicon compound varies from 0.1 to 50.

2. Catalytic system according to Claim 1, **characterized in that** the non-halogenated organoaluminium compound is chosen from trialkylaluminiums and their mixtures.

3. Catalytic system according to Claim 1 or 2, **characterized in that** the organic oxygenated silicon compound is chosen from dimethoxy- and diethoxysilanes substituted by at least one alkyl or cycloalkyl radical comprising a secondary or tertiary carbon atom in the α, β or γ position.

4. Catalytic system according to Claim 3, in which the organic oxygenated silicon compound is chosen from diisobutyldimethoxysilane, di(tert-butyl)dimethoxysilane, diisopropyldimethoxysilane, dicyclohexyldimethoxysilane, cyclohexylmethyldimethoxysilane and isobutylmethyldimethoxysilane.

5. Catalytic system according to any one of Claims 1 to 4, **characterized in that** the solid based on complexed titanium trichloride of δ crystalline form is obtained by successive or combined treatments of the solid resulting from the reduction of titanium tetrachloride or tetraalkoxide by an organoaluminium reducing agent by an electron-donating compound and by a halogenated compound.

6. Catalytic system which can be used for the polymerization of α-olefins, comprising:

   - a solid based on complexed titanium trichloride of δ crystalline form substantially devoid of magnesium obtained by successive or combined treatments of the solid resulting from the reduction of titanium tetrachloride or tetraalkoxide by an organoaluminium reducing agent by an electron-donating compound and by a halogenated compound and which has been subjected to a prepolymerization treatment, consisting in bringing it into contact with an α-olefin under polymerizing conditions, and an activation treatment, consisting in bringing it into contact with an activation agent chosen from organoaluminium compounds and the products from the reaction of an organoaluminium compound with a compound chosen from hydroxyaromatic compounds in which the hydroxyl group is sterically hindered;
   - an organoaluminium compound which is triethylaluminium, and
   - an organic oxygenated silicon compound which is dicyclopentyldimethoxysilane,

   such that the molar ratio of the aluminium of the non-halogenated organoaluminium compound to the titanium of the solid based on complexed titanium trichloride of δ crystalline form varies from 1 to 50 and the molar ratio of the aluminium of the organoaluminium compound to the silicon of the organic oxygenated silicon compound varies from 0.1 to 50.

7. Catalytic system according to Claim 5, in which the solid based on complexed titanium trichloride of δ crystalline form was activated by being brought into contact with an activation agent chosen from organoaluminium compounds.

8. Catalytic system according to Claim 5, in which the solid based on complexed titanium trichloride of δ crystalline form was activated by being brought into contact with an activation agent chosen from the products from the reaction of an organoaluminium compound with a compound chosen from hydroxyaromatic compounds in which the hydroxyl group is sterically hindered.

9. Catalytic system according to any one of Claims 1 to 4, **characterized in that** the solid based on complexed titanium trichloride of δ crystalline form is obtained by heat treatment, in the presence of a halogenated agent, of the liquid material resulting from bringing $TiCl_4$, pretreated with an electron-donating compound, into contact with a composition (O) corresponding to the general formula:

$$AlR_pZ_qX_{3-(p+q)} \qquad (V)$$

in which

   - R represents a hydrocarbonaceous radical comprising from 1 to 18 carbon atoms,
   - Z represents a group chosen from $-OR^4$, $-SR^4$ and $-NR^4R^5$ in which $R^4$ and $R^5$ each represent a hydrocar-

bonaceous radical or a hydrogen atom,
- X represents a halogen atom,
- p is any number such that $0 < p < 3$,
- q is any number such that $0 < q < 3$,

the sum $(p + q)$ being such that $0 < (p + q) \leq 3$.

10. Catalytic system according to Claim 9, **characterized in that** the solid based on complexed titanium trichloride of $\delta$ crystalline form is obtained by adding to the medium for the preparation of the said solid, at any time, an organic or inorganic support (S) exhibiting a porous texture.

11. Catalytic system according to either one of Claims 9 and 10, **characterized in that** the solid based on complexed titanium trichloride of $\delta$ crystalline form was activated by being brought into contact with an activation agent chosen from organoaluminium compounds and the products from the reaction of an organoaluminium compound with a compound chosen from hydroxyaromatic compounds in which the hydroxyl group is sterically hindered.

12. Catalytic system according to any one of Claims 1 to 11, **characterized in that** the solid based on complexed titanium trichloride of $\delta$ crystalline form was subjected, at any time during its preparation, to a prepolymerization treatment with an $\alpha$-olefin.

13. Catalytic system according to any one of Claims 5 to 8, **characterized in that** the molar ratio of the aluminium of the non-halogenated organoaluminium compound to the titanium of the solid based on complexed titanium trichloride of $\delta$ crystalline form varies from 1.5 to 20.

14. Catalytic system according to any one of Claims 5 to 8, **characterized in that** the molar ratio of the aluminium of the non-halogenated organoaluminium compound to the silicon of the organic oxygenated silicon compound varies from 1 to 5.

15. Catalytic system according to any one of Claims 9 to 11, **characterized in that** the molar ratio of the aluminium of the non-halogenated organoaluminium compound to the titanium of the solid based on complexed titanium trichloride of $\delta$ crystalline form varies from 1.5 to 25.

16. Catalytic system according to any one of Claims 9 to 11, **characterized in that** the molar ratio of the aluminium of the non-halogenated organoaluminium compound to the silicon of the organic oxygenated silicon compound varies from 1 to 20.

17. Process for the polymerization of $\alpha$-olefins carried out in the presence of a catalytic system according to any one of Claims 1 to 16.

18. Process according to Claim 17, applied to the polymerization of propylene.

19. Process according to Claim 18, applied to the manufacture of propylene polymers for which the weight-average molecular mass is from $1.0 \times 10^6$ to $1.2 \times 10^6$ g/mol.

20. Propylene polymers which can be obtained according to the process of either one of Claims 18 and 19.

21. Propylene polymers for which the weight-average molecular mass is from $1.0 \times 10^6$ g/mol to $1.2 \times 10^6$ g/mol, which can be obtained according to the process of Claim 18.